# EUROPÄISCHE PATENTSCHRIFT

(11) **EP 1 237 776 B1**
(45) Veröffentlichungstag und Bekanntmachung des Hinweises auf die Patenterteilung: **11.06.2003**
(21) Anmeldenummer: 00971202.7
(22) Anmeldetag: 09.11.2000
(51) Int. Cl.: B62D 5/04

(54) **ROHRFÖRMIGE, ELEKTRISCH UNTERSTÜTZTE LINKHILFE MIT HOHEM WIRKUNGSGRAD**
HIGH-EFFICIENCY TUBULAR ELECTRICAL STEERING SERVO
DISPOSITIF D'ASSISTANCE DE DIRECTION ELECTRIQUE TUBULAIRE A RENDEMENT ELEVE

(30) Priorität: 01.12.1999 CH 219799
(43) Veröffentlichungstag der Anmeldung: 11.09.2002
(73) Patentinhaber: ThyssenKrupp Presta AG, 9492 Eschen (LI)
(72) Erfinder: BRUNNSCHWEILER, Daniel, CH-7306 Fläsch (CH); ALFREDSSON, Magnus, CH-9315 Neukirch (CH); BATTLOGG, Stefan, A-6771 St. Anton im Montafon (AT)
(74) Vertreter: Wegmann, Urs
(86) Internationale Anmeldenummer: CH0000595
(87) Internationale Veröffentlichungsnummer: WO01040046

(56) Entgegenhaltungen:
- EP-A- 0 101 579
- DE-A- 10 011 140
- GB-A- 2 284 790

## Beschreibung

Die Erfindung bezieht sich auf eine Lenkhilfenanordnung für Kraftfahrzeuge nach Oberbegriff des Anspruchs 1.

Bekannte Servolenksysteme werden beispielsweise hydraulisch unterstützt betrieben dadurch, dass an der Lenkwelle das vom Lenker erzeugte Steuerdrehmoment gemessen wird und damit über eine Hydraulik ein Kolben gesteuert wird, der auf die querliegende Zahnstange des Lenksystems, welche Teil einer Schubstange ist, einwirkt und somit eine Kraftunterstützung je nach Ausschlag des Lenkrades erzeugt. Solche elektrohydraulische Systeme haben den Nachteil, dass bei hohen Fahrzeuggeschwindigkeiten, wo an sich die geringste Servokraftunterstützung benötigt wird, die grösste Hydraulikleistung anfällt und im Stillstand des Fahrzeuges die Kraftunterstützung stark abfällt, wo die grössten Lenkkräfte benötigt würden.

Man hat deshalb bereits versucht, Lenkhilfenanordnungen zu realisieren, die direkt die Zahnstange mit einem Elektromotor antreiben. Solche Systeme sparen Platz und Energie, da der Elektromotor nur bei Bedarf aktiviert wird. Mit elektromotorisch betriebenen Lenkhilfeanordnungnen wäre es möglich, das Hilfskraftangebot zum richtigen Zeitpunkt bereitzustellen, beispielsweise entsprechend stärker bei stillstehendem Fahrzeug.

Aus der US-Patentschrift 5,711,396 ist beispielsweise ein elektromotorisch betriebener Servoantrieb bekannt geworden, welcher direkt auf die Zahnstange des Lenksystems wirkt. Um genügend hohe Kräfte erzeugen zu können, ist ein entsprechend robuster Elektromotor vorgesehen, der entsprechend stark untersetzt werden muss, um genügend hohe Stellkräfte zu erzeugen. Bei der vorerwähnten Patentschrift wurde der Elektromotor seitlich zur Zahnstange beziehungsweise Schubstange angeordnet, welcher ein Kugelspindelgetriebe antreibt, das koaxial zur Zahnstangenachse angeordnet ist und als Untersetzungsgetriebe dient. Bei dieser Anordnung ist nachteilig, dass der Motor und die Getriebeanordnung kompliziert aufgebaut ist und relativ viel Einbauraum beansprucht. Ausserdem ist der Wirkungsgrad nicht besonders hoch. Um Einbauraum zu sparen, wurde auch versucht, rezirkulierende Kugelspindelgetriebe zusammen mit dem Elektromotor koaxial auf der Zahnstangenachse anzuordnen, wie dies beispielsweise aus der gattungsbilden den GB 2 284 790 bekannt geworden ist. Eine weitere koaxiale Anordnung wurde in der EP 0 101 579 offenbart. Die bis heute bekannten Anordnungen haben den Nachteil, dass diese relativ aufwendig gebaut sind, insbesondere im Bereich der Lagerung der Kugelmutter und des Motorrotors. Auch ist wegen den begrenzten Wirkungsgraden der bisher bekannten elektrisch betriebenen Servolenkanordnungen der Einsatzbereich begrenzt, da diese auch eine hohe elektrische Speiseleistung des Elektromotors verlangen. Die zur Verfügung stehende elektrische Leistung des Bordnetzes eines Kraftfahrzeuges ist begrenzt. Ausserdem sind die bisherigen Lenkhilfen zu wenig kompakt, womit der Einsatz bei kleinen Fahrzeugen ebenfalls begrenzt wird oder ein Einsatz unwirtschaftlich ist.

Die Aufgabe der vorliegenden Erfindung liegt darin, die Nachteile des vorerwähnten Standes der Technik zu beseitigen. Insbesondere besteht die Aufgabe darin, eine elektrische Lenkhilfe für eine Lenkanordnung zu realisieren, welche äusserst kompakt aufgebaut ist und welche es erlaubt, ein rasches Ansprechverhalten mit einer guten Dynamik mit ansprechendem Lenkverhalten für den Lenker zu erzielen, welche bei hohem Wirkungsgrad arbeitet und grosse Stellkräfte direkt auf die Schubstange beziehungsweise Zahnstange wirkend erzeugen kann und wirtschaftlich herstellbar ist. Die Anordnung soll ausserdem kompakt sein und rohrförmig koaxial zur Schubstangenachse angeordnet werden können.

Die Aufgabe wird erfindungsgemäss durch die Anordnung nach den Merkmalen des Anspruchs 1 gelöst. Die abhängigen Ansprüche definieren weitere vorteilhafte Ausführungsformen.

Die Aufgabe wird erfindungsgemäss dadurch gelöst, dass ein koaxial zur Schubstangenachse angeordneter Elektromotor mit seinem Rotor einen Rotations-Translationswandler antreibt. Dieser besteht aus einer Kugelgewindemutter, welche ihrerseits in ein Gewindestück eingreift, welches in einem Teilbereich der Schubstange angeordnet ist. Die drehbare Mutter beziehungsweise der Rotor sind drehgelagert mit nur einem Lager angeordnet und dieses ortsfest gegen das Fahrzeugchassis abgestutzt, dass dies beim Verdrehen der Mutter eine axiale Verschiebung der Schubstange bewirkt, womit eine entsprechende Kraft auf die Schubstange einwirkt. Die Mutter und die Schubstange wirken wie ein Getriebe zur Kraftübersetzung. Der Vorteil dieser Anordnung besteht darin, dass der Potor des Motors direkt mit der Kugelgewindemutter des Rotations-Translationswandlers gekoppelt ist und nur ein Lager benötigt wird.

Als Rotations-Translationskraftwandler sind die bereits bekannten rezirkulierenden Kugelspindelgetriebe bzw. Kugelumlaufspingeltriebe besonders geeignet. Bei solchen Anordnungen werden die Kugeln, welche zwischen der Mutter und dem Gewingegang der Gewindestange abrollen, beispielsweise in einer endlosen Schlaufe wieder auf ihre ursprüngliche Position zurückgeführt. Eine besonders geeignete Anordnung eines Kugelumlaufgewindetriebes liefert beispielsweise die Firma Amsler & Co AG in CH-8245 Feuerthalen mit der Typenbezeichnung "Star" und dem Namen Kugelgewindetrieb. Mit dieser Ausführung kann eine besonders kompakte, präzise Wandleranordnung mit hohem Wirkungsgrad erzielt werden. Die Verwendung eines speziellen, elektronisch kommutierten Motors mit glokkenartigem Rotor ermöglicht ausserdem die Verwendung nur eines einzigen Lagers für die Lagerung der Kugelgewindemutter zusammen mit dem glockenartigen Rotor. Der koaxial zur Zahnstangen- bzw. Schubstangenachse angeordnete Elektromotor ist so ausgebildet, dass der Stator mit seiner Wicklung die Schubstangenachse koaxial umschliesst und darüber vorzugsweise rohrförmig der Rotor den Stator drehgelagert umschliesst. Der Rotor trägt Permanentmagnete vom Typ Selten-Erden und ist als glockenförmiger Rotor ausgebildet, welcher einseitig zusammen mit der Kugelgewindemutter gelagert ist. Mit einer solchen Anordnung sind bei kompakter Ausführung hohe Wirkungsgrade erreichbar.

Das Kraftübersetzungsverhältnis des Rotations-Translationswandlers und des Motors wird so ausgelegt, dass hohe Stellkräfte erzeugt werden können, vorzugsweise bis über 9 kN bei schnellen Reaktionszeiten, was insbesondere für die Lenksicherheit wichtig ist. Der Motor wird entsprechend den gewünschten Anforderungen über eine elektronische Leistungsstufe frequenzgesteuert, wobei die Ansteuerfrequenz vorzugsweise über dem Bereich des menschlichen Hörvermögens liegt. Die Leistungsstufe wird von einer Steuerungseinheit getrieben, welche als Ist-Wertsignal das an der Lenkwelle gemessene Drehmoment verarbeitet, welches beim Lenken gegenüber der Zahnstange erzeugt wird, dazu wird beispielsweise ein Torsionsstab zwischen dem Lenkgetriebe und der Lenkwelle angeordnet und dessen Deformation bei Krafteinwirkung gemessen. Die Steuerung kann mit Vorteil mit einer entsprechenden Charakteristik bzw. Übertragungsfunktion versehen werden, um die gewünschte Steuercharakteristik bei verschiedenem Betriebsverhalten erzeugen zu können. Beispielsweise kann das tempoabhängige und gewichtsabhängige Steuerkraftverhalten berücksichtigt und kompensiert werden. Des weiteren kann mit Vorteil die Rückstellung der Vorderräder bei Loslassen des Lenkrades unterstützt werden und/oder Ungleichförmigkeiten des Lenkungsgelenkes zum Beispiel in Folge Kardanfehler kompensiert werden und/oder Rotationsschwingungen der Lenkanlage aktiv gedämpft werden. Der elektronisch gesteuerte Motor erlaubt es ausserdem, bestimmte Negativeigenschaften des Motors wie beispielsweise Restrippelverhalten oder aber auch Fertigungstoleranzen auszugleichen, indem beispielsweise die Motorleistung kompensierend moduliert wird, entweder durch feste Vorgaben oder durch Messung der Wirkung über Sensoren und Einbindung in ein programmiertes Regelsystem. Die Steuerung ist vorteilhafterweise als programmierbare Steuerung ausgebildet, beispielsweise als Mikroprozessorsystem, welches über eine Software definiert werden kann oder auch über festeingebundene, abgespeicherte Programme. Mit der erfindungsgemässen Motorwandleranordnungen können gute Gesamtwirkungsgrade bei kompakter Bauweise und mit hohen Stellkräften ohne Überlastung des Bordnetzes erreicht werden. Die Erfindung wird nun nachfolgend beispielsweise mit schematischen Figuren näher erläutert. Es zeigen:

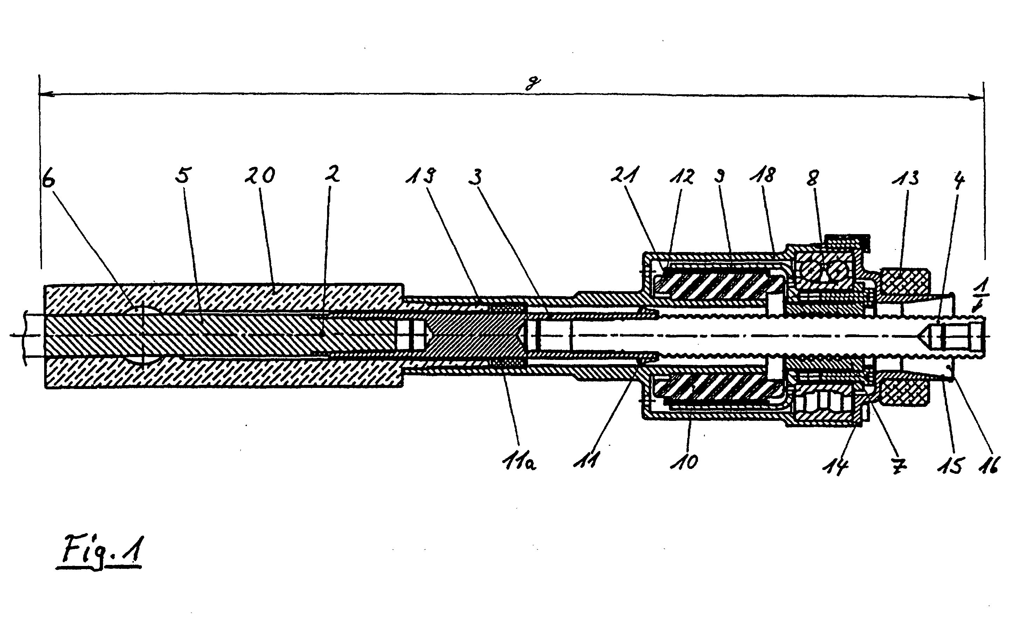

- Fig. 1: schematisch und im Querschnitt eine erfindungsgemässe Lenkhilfenanordnung

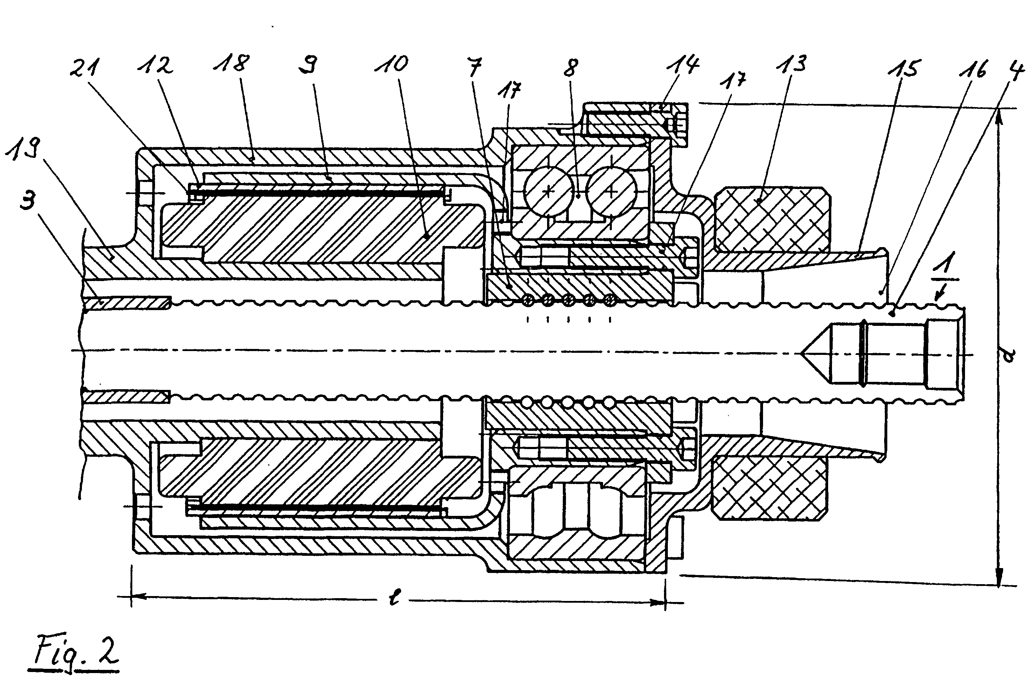

- Fig. 2: schematisch und im Querschnitt eine vergrösserte Anordnung gemäss Fig. 1 der Motorwandleranordnung

In den Figuren ist schematisch und im Schnitt eine erfindungsgemässe Lenkhilfenanordnung dargestellt mit einer axial verschieblichen Zahnstangenanordnung 1 und einer koaxial angeordneten elektromotorischen Antriebseinheit. Die Zahnstangenanordnung 1 wird in bekannter Weise in einem Kraftfahrzeug so angeordnet, dass diese an ihren Enden an die lenkbaren Räder gekoppelt ist, beispielsweise über sogenannte Spurstangen, welche mit den Rädern, die drehgelagert sind, durch hin und her bewegen beim Steuern verschwenkt werden können, so dass die Räder einen entsprechenden Steuereinschlag erfahren. Die Zahnstangenanordnung 1 weist einen ersten Abschnitt 2 auf, auf dessem Stangenteilbereich Zähne 5 angeordnet sind, welche im Eingriff mit einem Ritzel 6 stehen, welches über die Lenkwelle vom Steuerrad beim Steuervorgang angetrieben wird. Dieser erste Stangenteilbereich 2 mit den Zähnen 5 bildet zusammen mit dem Ritzel 6, das im Gehäuse 20 untergebrachte Lenkgetriebe 20. Zwischen dem Ritzel 6 und dem Lenkrad entsteht beim Verdrehen eine Krafteinwirkung, welche über Messmittel erfasst wird und das resultierende Signal ausgewertet und entsprechend über eine Steueranordnung bzw. eine Regelkreisanordnung auf eine motorische Antriebseinrichtung geführt wird, welche wiederum Kraft auf die Zahnstangenanordnung 1 einkoppelt, um auf diese Weise einen leichteren Steuervorgang zu ermöglichen.

Der erste Stangenteilbereich 2 ist fortgesetzt über ein Zwischenstück 3, welches den Zahnstangenteilbereich 2 mit dem zweiten Stangenteilbereich 4 verbindet, wobei dieser Stangenteil 4 als Kugelspindel ausgebildet ist und Teil des Antriebes ist. Das äussere Ende des ersten Stangenteil 2 und des zweiten Stangenteil 4 ist im eingebauten Zustand im Fahrzeug mit den verschwenkbaren Rädern wirkverbunden. Am zweiten Stangenteil bzw. an der Kugelspindel ist koaxial umlaufend eine Kugelmutter 7 angeordnet, welche drehbar um die Stangenachse mit einer Lageranordnung 8 gelagert ist, so dass die Mutter 7 in axialer Richtung gegenüber der Einbauposition und somit gegenüber dem Chassis in axialer Richtung zur Stangenanordnung 1 fixiert ist. Beim Verdrehen der Kugelmutter 7 werden somit die Radialkräfte und die Axialkräfte auf dem kürzesten Weg aufgenmommen und in das Gehäuse 18, welches das Lager und den Motor umschliesst, abgeführt. Das Verdrehen der Kugelmutter 7 bewirkt somit eine Längsverschiebung der Kugelspindel 4 und somit der Zahnstangenanordnung 1. Die Lageranordnung 8 besteht vorteilhafterweise aus einem hochbelastbaren Kugellager, beispielsweise einem doppelreihigen Schrägkugellager oder aber auch aus einem Vierpunkt-, Rollen- oder Rillenkugellager.

Der Elektromotor ist als elektronisch kommutierter Motor ausgebildet und weist einen Stator 10 auf, welcher als Elektrowicklung ausgebildet ist und direkt neben der Kugelmutter 7 ortsfest angeordnet ist und die Zahnstangenanordnung 1 koaxial umschliesst. Diese Statorwicklung 10 kann beispielsweise auf einem Gehäuseteil 18, welches rohrförmig die Zahnstangenanordnung umschliesst, angeordnet werden und gleichzeitig als Schutzrohr bzw. Verbindungsrohr zwischen Lenkgetriebegehäuse 20 und dem Motorwandlergehäuse 18 dienen. Die Statorwicklung 10 wird wie bereits erwähnt von einer Elektroniksteuerungs- bzw. Regelungseinheit angespiesen. Der Rotor 9 des Elektromotors ist vorteilhafterweise rohr- oder glockenförmig als Aussenläufer ausgebildet und direkt gemeinsam mit der Kugelmutter 7 über die Lageranordnung 8 gelagert. Der Rotor 9 trägt Permanentmagnete mit einem hohen Energieprodukt vom Typ Selten-Erd-Magnete, vorzugsweise vom Typ Cobalt-Samarium oder Neodym.

Zwischen Rotor 9 und dem Stator 10 ist ein Wirkluftspalt 21 von weniger als 2 mm vorgesehen, vorzugsweise sollte der Luftspalt < 1,5 mm sein, um besonders gute Wirkungsgrade zu erreichen. Die Luftspaltbreitentoleranz beträgt hier bei ≤ 10 % gegenüber dem durchschnittlichen Luftspaltbreitenmass, um genügend gute Gleichlaufeigenschaften und somit ein genügend gutes Steuerverhalten zu ermöglichen.

Das Gehäuse 18 ist gegenüber der Endseite des zweiten Stangenteils 4 vorteilhafterweise mit einem Stutzen 15 versehen, welcher eine koaxiale Öffnung 16, die Kugelspindel 4 umschliessend, bildet und somit eine Lufteintrittsöffnung zum Motorbereich ermöglicht. An diesem Stutzen 15 ist beispielsweise ein Schutzgummibalg angeordnet, welcher beim hin und her bewegen der Zahnstangenanordnung 1 eine Art Pumpwirkung für Luft ausübt und damit durch Öffnungen bzw. Aussparungen 17 im Bereich der Lageranordnung 8 ermöglicht, Luft insbesondere durch den Motorluftspalt 21 hindurch zu führen. Dies bewirkt ein effizientes Kühlen der Anordnung mit wenig Aufwand.

Das Verbindungsrohrteil 19, welches das Zwischenstück 3 der Zahnstangenanordnung 1 umschliesst, wird mit Vorteil an der Innenrohrfläche als Gleitfläche ausgebildet, an welchem ein Abstützelement 11, welches am Zwischenstück 3 angeordnet ist, entlang gleiten lässt bei der Hin- und Herbewegung der Zahnstangenanordnung 1. Diese Abstützung 11 bewirkt ein Verhindern des Verkippens des Kugelspindelstangenteils 4, welches zur Folge hätte, dass durch eine Art Verklemmung im Kugelgewindespindelwandler der Wirkungsgrad verschlechtert würde. Die Abstützung 11 wird vorteilhafterweise mit Gleitmaterial im Bereich der Laufflächen versehen, wie mit geeigneten Kunststoffen oder entsprechenden Gleitbüchsen. Die Abstützung kann aber auch mit einem Abstützelement 11a, welches am Innenrohr 19 ortsfest angebracht ist, erfolgen, wobei die Gleitfläche dann am Zwischenstück 3 ausgebildet ist. Möglich ist auch eine Kombination beider Abstützarten.

Am Stutzen 15, welcher mit dem Gehäuse 18 verbunden ist, wird vorteilhafterweise die Befestigung der Lenkhilfenanordnung vorgesehen gegenüber dem Chassis, beispielsweise mit einer Gummiringdämpferanordnung 13 und einem Haltebügel.

Die Anordnung kann bei hohem Wirkungsgrad äusserst kompakt und wirtschaftlich mit sehr wenigen Teilen realisiert werden. Es sind ohne weiteres kompakte Motorwandlerabmessungen möglich von weniger als 120 mm Durchmesser d bei einer Länge 1 von weniger als 140 mm entsprechend der erfindungsgemässen Ausführung. Bei diesen Abmessungen ist ein Spindelhub von ca. 2 x 70 mm, das heisst insgesamt von 140 mm, möglich, wobei der Spindeldurchmesser im Bereich von 24 mm liegt bei einer Gewindespindelsteigung von 5 bis 10 mm. Die Axialkraft an der Spindel erreicht hierbei mind. 9000 N bei einer Drehgeschwindigkeit des Motors von bis max. 800°/s und einem Drehmoment des Elektromotors von bis zu 10 Nm.

Die erfindungsgemässe Lenkhilfenanordnung besteht im wesentlichen aus sehr wenigen Bauteilen, wie dem Stator 10, dem Rotor 9 mit den Magneten 12, der Lageranordnung 8, dem Gehäuse 18 mit dem Gehäusedeckel, der Kugelmutter 7 und dem Kugelspindelteil 4 bzw. der Zahnstangenanordnung 1. Durch die hohe Integration der Bauteile ist nicht nur die Grösse der Motorwandleranordnung wie erwähnt sehr gering, sondern auch die Gesamtlänge g der Zahnstangenanordnung 1 vom einen Ende des Lenkgetriebegehäuses bis zum anderen Ende der Stangenanordnung 1, beispielsweise 650 mm. Ausserdem ist durch die geringe Anzahl der Bauteile die Toleranzkette sehr kurz, was eine präzise Herstellung bei vertretbaren Kosten ermöglicht und den hohen Wirkungsgrad der Anordnung unterstützt.

## Patentansprüche

1. Lenkhilfenanordnung zur Verschwenkung von lenkbaren Fahrzeugrädern bei Drehung eines Lenkrades, wobei dies Vorrichtung umfasst:
eine Zahnstangenanordnung (1), welche bewegbar ist, um eine Verschwenkbewegung der Räder zu bewirken, wobei die Stangenanordnung (1) drei Teilbereiche aufweist, einen ersten Stangenteilbereich (2), mit Zähnen (5), ein Zwischenbereich (3) und ein zweiter Stangenbereich (4), welcher als Kugelspindel (4) ausgebildet ist;
eine Anordnung mit einem Ritzel (6), der mit dem Lenkrad drehbar ist und im Eingriff mit den Zähnen (5) des ersten Stangenteils (2) ist, um eine Lenkkraft auf die Zahnstangenanordnung aufzubringen;
eine Kugelmutter (7), die in die Kugelspindel (4) eingreifft, wobei diese mit einer Lageranordnung (8) gegenüber einem Gehäuse (18) drehbar gelagert ist;
eine Elektromotoranordnung (9, 10, 12) mit einem zur Stangenanordnung (1) koaxial angeordneten Stator (10) und einem Rotor (9), wobei der Rotor (9) mit der Kugelmutter (7) wirkverbunden ist,
**dadurch gekennzeichnet, dass** die Lageranordnung (8) ein einzelnes Lager (8) aufweist zur einseitigen Lagerung des Rotor (9) und der Rotor (9) mit der Mutter (7) gemeinsam drehgelagert ist.

2. Anordnung nach Anspruch 1 **dadurch gekennzeichnet, dass** der Rotor (9) glockenförmig ausgebildet ist.

3. Anordnung nach einem der vorhergehenden Ansprüche **dadurch gekennzeichnet, dass** die Elektromotoranordnung (9, 10, 12) als elektronisch kommutierte Motoranordnung ausgebildet ist.

4. Anordnung nach einem der vorhergehenden Ansprüche **dadurch gekennzeichnet, dass** der Stator (10) ortsfest und an der Stangenanordnung (1) zugewandten Seite angeordnet ist und dieser als Wicklung ausgebildet ist.

5. Anordnung nach einem der vorhergehenden Ansprüche **dadurch gekennzeichnet, dass** der Rotor (9) mit Permanentmagneten (12) bestückt ist, insbesondere vom Typ Seltenerdmagnete, wie Cobalt-Samarium- oder Neodymmagnete.

6. Anordnung nach einem der vorhergehenden Ansprüche **dadurch gekennzeichnet, dass** zwischen Rotor (9) und Stator (10) ein Luftspalt von ≤ 2 mm vorzugsweise ≤ 1,5 mm vorgesehen ist, wobei insbesondere die Luftspaltbreitentoleranz ≤ 10 % gegenüber dem Luftspaltmass ist.

7. Anordnung nach einem der vorhergehenden Ansprüche **dadurch gekennzeichnet, dass** im Bereich des Zwischenstückes (3) gleitfähige Abstützmittel (11, 11a) vorgesehen sind, die zwischen dem Zwischenstück (3) und einem Führungsrohrteil (19) angeordnet sind, wobei die Abstützmittel (11, 11a) vorzugsweise im Bereich der Kontaktflächen mit Gleitmaterial wie mit Kunststoffen oder Gleitsinterwerkstoffen versehen sind.

8. Anordnung nach einem der vorhergehenden Ansprüche **dadurch gekennzeichnet, dass** im Bereich der Lageranordnung (8) Luftdurchtrittsöffnungen (16, 17) vorgesehen sind zur Durchleitung von Kühlluft durch den Luftspalt (21).

9. Anordnung nach einem der vorhergehenden Ansprüche **dadurch gekennzeichnet, dass** die Lageranordnung (8) aus rollenden Lagern besteht, insbesondere aus Kugellagern wie ein Schrägkugellager, vorzugsweise zweireihig ausgebildet.

10. Anordnung nach einem der vorhergehenden Ansprüche **dadurch gekennzeichnet, dass** die Kugelmutter (7) eine rezirkulierende Kugelmutter ist, wie eine Umlaufkugelmutter oder ein Kugelgewindetrieb.

11. Anordnung nach einem der vorhergehenden Ansprüche **dadurch gekennzeichnet, dass** die Elektromotoranordnung (9, 10, 12) mit der Mutter (7) und der Lageranordnung (8) einen maximalen Durchmesser (d) von 120 mm und eine maximale Länge (1) von 140 mm aufweist.

12. Anordnung nach einem der vorhergehenden Ansprüche **dadurch gekennzeichnet, dass** Messmittel zur Drehmomentmessung beim Drehen des Steuerrades vorgesehen sind und diese mit einer Steuer- und/oder Regeleinrichtung mit der Elektromotoranordnung (9, 10) wirkverbunden sind und vorzugsweise die Steuer- und/oder Regeleinrichtung eine Programmsteuerung enthält zur Festlegung oder Nachführung einer vorgebbaren Übertragungscharakteristik.

## Claims

1. Steering aid arrangement to swivel steerable vehicle wheels on rotation of a steering wheel, where this device comprises:
a toothed rack arrangement (1) which is mobile to cause a swivel movement of the wheels, where the rack arrangement (1) has three part areas, a first rack part area (2) with teeth (5), an intermediate area (3) and a second rack area (4) which is formed as a ball spindle (4);
an arrangement with a pinion (6) which can be rotated with the steering wheel and intermeshes with the teeth (5) of the first rack part (2) in order to apply a steering force to the toothed rack arrangement;
a ball nut (7) which engages in the ball spindle (4), this being rotatably mounted in relation to a housing (18) by means of a bearing arrangement (8);
an electric motor arrangement (9, 10, 12) with a stator (10) arranged coaxial to the rack arrangement (1) and a rotor (9), the rotor (9) being actively connected with the ball nut (7),
**characterised in that** the bearing arrangement (8) has a single bearing (8) for unilateral mounting of the rotor (9) and the rotor (9) is rotatably mounted together with the nut (7).

2. Arrangement according to claim 1, **characterised in that** the rotor (9) is formed bell-shaped.

3. Arrangement according to any of the previous claims, **characterised in that** the electric motor arrangement (9, 10, 12) is designed as an electronically commutated motor arrangement.

4. Arrangement according to any of the previous claims, **characterised in that** the stator (10) is fixed in location and arranged on the side facing the rack arrangement (1) and is formed as a winding.

5. Arrangement according to any of the previous claims, **characterised in that** the rotor (9) is fitted with permanent magnets (12), in particular of the rare earth magnet type, such as cobalt-samarium or neodymium magnets.

6. Arrangement according to any of the previous claims, **characterised in that** between the rotor (9) and stator (10) is provided an air gap of less than ≤ 2 mm, preferably ≤ 1.5 mm, where in particular the air gap width tolerance is ≤ 10% of the air gap dimension.

7. Arrangement according to any of the previous claims, **characterised in that** in the area of the intermediate piece (3) are provided sliding support means (11, 11a) which are arranged between the intermediate piece (3) and a guide sleeve part (19), where the supporting means (11, 11a), preferably in the area of the contact surfaces, are fitted with slip material such as plastic or slip sinter materials.

8. Arrangement according to any of the previous claims, **characterised in that** in the area of the bearing arrangement (8) are provided air passage openings (16, 17) for the passage of cooling air through the air gap (21).

9. Arrangement according to any of the previous claims, **characterised in that** the bearing arrangement (8) consists of roller bearings, in particular ball bearings such as an angular ball bearing, preferably formed as a double row.

10. Arrangement according to any of the previous claims, **characterised in that** the ball nut (7) is a recirculating ball nut such as a circulating ball nut or a ball screw.

11. Arrangement according to any of the previous claims, **characterised in that** the electric motor arrangement (9, 10, 12) with the nut (7) and the bearing arrangement (8) has a maximum diameter (d) of 120 mm and a maximum length (1) of 140 mm.

12. Arrangement according to any of the previous claims, **characterised in that** measuring means are provided to measure the torque on rotation of the steering wheel and these means with a control and/or adjustment device are actively connected with the electric motor arrangement (9, 10) and preferably the control and/or adjustment device contains a program control to establish or follow a prespecifiable transfer characteristic.

## Revendications

1. Dispositif de direction assistée pour le pivotement de roues directrices de véhicules par la rotation d'un volant, ce dispositif comprenant :
un dispositif à crémaillère (1) qui est mobile pour causer un mouvement de pivotement des roues, le dispositif à crémaillère (1) comportant trois zones partielles, une première zone partielle de crémaillère (2), qui comporte des dents (5), une zone intermédiaire (3) et une deuxième zone de crémaillère (4) qui est réalisée sous la forme d'une broche à billes (4) ;
un dispositif comportant un pignon (6) qui peut tourner avec le volant et qui est en prise avec les dents (5) de la première partie de la crémaillère (2) pour exercer une force de braquage sur le dispositif à crémaillère (1) ;
un écrou à billes (7) qui est en prise dans la broche à billes (4), cette dernière étant montée à rotation par rapport à un boîtier (18) au moyen d'un dispositif de palier (8) ;
un dispositif à moteur électrique (9, 10, 12) comportant un stator (10) qui est disposé coaxialement par rapport au dispositif de crémaillère (1) et un rotor (9), le rotor (9) étant relié de manière opérationnelle avec l'écrou à billes (7),
**caractérisée en ce que** le dispositif de palier (8) comporte un seul palier (8) pour le support du rotor (9) sur un seul côté et **en ce que** le rotor (9) est monté à rotation avec l'écrou (7).

2. Dispositif selon la revendication 1, **caractérisée en ce que** le rotor (9) est réalisé sous la forme d'une cloche.

3. Dispositif selon l'une quelconque des revendications précédentes, **caractérisée en ce que** le dispositif à moteur électrique (9, 10, 12) est réalisé sous la forme d'un dispositif moteur à commutation électronique.

4. Dispositif selon l'une quelconque des revendications précédentes, **caractérisée en ce que** le stator (10) est disposé de manière fixe sur le côté faisant face au dispositif de crémaillère (1) et **en ce que** ce dernier est réalisé sous la forme d'un enroulement.

5. Dispositif selon l'une quelconque des revendications précédentes, **caractérisée en ce que** le rotor (9) est équipé d'aimants permanents (12), en particulier du type des aimants à terre rare, tels que les aimants au cobalt, au samarium et au néodyme.

6. Dispositif selon l'une quelconque des revendications précédentes, **caractérisée en ce que**, entre le rotor (9) et le stator (10), on prévoit un entrefer (21) qui est inférieur ou égal à 2 mm, de préférence inférieur ou égal à 1,5 mm, la tolérance pour la largeur de l'entrefer étant inférieure ou égale à 10 % de la mesure de l'entrefer.

7. Dispositif selon l'une quelconque des revendications précédentes, **caractérisée en ce que**, dans la zone de la pièce intermédiaire (3), on prévoit des moyens d'appui (11, 11a) qui peuvent glisser et qui sont disposés entre la pièce intermédiaire (3) et une section tubulaire de guidage (19), les moyens d'appui (11, 11a) étant munis, de préférence, dans la zone des surfaces de contact, d'une matière de glissement, telle que des matières plastiques ou des matières frittées de glissement.

8. Dispositif selon l'une quelconque des revendications précédentes, **caractérisée en ce que**, dans la zone du dispositif de palier (8), on prévoit des ouvertures de passage de l'air (16, 17) pour la circulation d'air de refroidissement à travers l'entrefer (21).

9. Dispositif selon l'une quelconque des revendications précédentes, **caractérisée en ce que** le dispositif de palier (8) est constitué de paliers à roulement, plus particulièrement de roulements à billes, tel qu'un roulement à billes à contact oblique, de préférence sur deux rangées.

10. Dispositif selon l'une quelconque des revendications précédentes, **caractérisée en ce que** l'écrou à billes (7) est un écrou à billes à recirculation, tel qu'un écrou à billes de circulation ou une vis à billes.

11. Dispositif selon l'une quelconque des revendications précédentes, **caractérisée en ce que** le dispositif à moteur électrique (9, 10, 12) présente, avec l'écrou (7) et le dispositif de palier (8), un diamètre maximal (d) de 120 mm et une longueur maximale (I) de 140 mm.

12. Dispositif selon l'une quelconque des revendications précédentes, **caractérisée en ce que** l'on prévoit des moyens de mesure pour la mesure du couple de rotation lorsque le volant tourne, **en ce que** ces derniers sont reliés de manière opérationnelle avec le dispositif à moteur électrique (9, 10), au moyen d'un dispositif de commande ou de régulation et **en ce que** le dispositif de commande ou de régulation contient une commande par programme pour fixer ou suivre une caractéristique de transmission pouvant être prédéterminée.
